# EUROPÄISCHE PATENTSCHRIFT

(11) **EP 0 658 756 B1**
(45) Veröffentlichungstag und Bekanntmachung des Hinweises auf die Patenterteilung: **05.06.2002**
(21) Anmeldenummer: 94119883.0
(22) Anmeldetag: 15.12.1994
(51) Int. Cl.: G01N 1/22

(54) **Entnahmesystem zur Entnahme eines Aerosols sowie Verwendung des Entnahmesystems**
Sampling system for sampling an aerosol and use of the sampling system
Dispositif de prélèvement pour le prélèvement d'un aérosol et application du dispositif

(30) Priorität: 17.12.1993 DE 4343288
(43) Veröffentlichungstag der Anmeldung: 21.06.1995
(73) Patentinhaber: Framatome ANP GmbH, 91050 Erlangen (DE)
(72) Erfinder: Röbig, Gerhard, Dr., D-36103 Flieden (DE)
(74) Vertreter: Tergau & Pohl Patentanwälte

(56) Entgegenhaltungen:
- EP-A- 0 390 941
- DE-A- 3 305 232
- GB-A- 802 247
- US-A- 3 794 909
- US-A- 4 342 234
- US-A- 4 756 200
- US-A- 5 297 432
- DIN 25423, "Probenahme bei der Radioaktivitätsüberwachung der Luft", März 1987

## Beschreibung

Die Erfindung betrifft ein Entnahmesystem zur Entnahme eines Teilvolumens eines Aerosols gemäß dem Oberbegriff des Anspruchs 1. Ein derartiges Entnahmesystem ist aus der DE 33 05 232 A1 bekannt.

Aerosole sind gemäß der Definition nach der DIN 25 423, Teil 1, Punkt 3.5, Dispersionen fester oder flüssiger Partikel in Luft (luftgetragen) oder in anderen Gasen. Sie treten in vielen industriellen Bereichen, beispielsweise in der chemischen Industrie und bei Verbrennungskraftanlagen, wie Motoren, Kraftwerken oder Heizungen, auf. Häufig ist dabei eine Überwachung der Konzentration der festen oder flüssigen Partikel des Aerosols aus verfahrenstechnischen Gründen oder Umweltschutzgründen erforderlich.

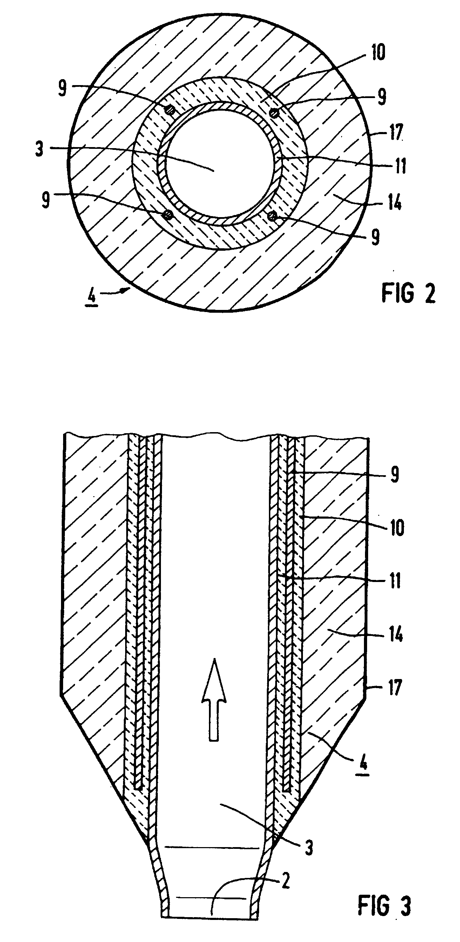

In "Ullmanns Encyklopädie der technischen Chemie", 4. Auflage, Band 5, 1980, Verlag Chemie, Weinheim wird in dem Kapitel "Bemerkungen zur Entnahme- und Aufbereitungstechnik" auf Seite 894 ein Gasentnahmesystem beschrieben. Ein in einer Leitung strömendes, zu analysierendes Gas wird über eine in der Leitung angeordnete Entnahmesonde entnommen und von dieser über eine Entnahmeleitung einem Analysator zugeführt. Bei einem Gas, welches eine kondensierbare Komponente enthält, wird entweder das Entnahme- und Analysesystem so stark beheizt, daß eine Kondensation der Komponente unterbleibt, oder die kondensierbare Komponente in einem Gaskühler abgeschieden und aus dem Gas entfernt. An die in dem Gaskühler abgeschiedene Komponente gebundene Aerosolpartikel stehen dann allerdings bei einer Analyse des Gases nicht mehr zur Verfügung. Eine Beheizung des Entnahmesystems erfolgt dabei gemäß Abb. 3 ausschließlich durch eine Beheizung einer Entnahmeleitung, die eine Entnahmevorrichtung mit dem Gaskühler verbindet, wobei die Entnahmevorrichtung aus einer Entnahmesonde, einem dieser nachgeschaltetem Absperrventil sowie einem Druckminderer besteht.

In der DIN 25423, "Probenahme bei der Radioaktivitätsüberwachung der Luft", März 1987 ist angegeben, wie Proben der Luft zur Kontrolle auf radioaktive Kontamination zu entnehmen sind. In Teil 1, Absatz 4.1.4.5, ist beschrieben, daß zur Vermeidung von Kondensatbildung bei hoher relativer Luftfeuchte eine Probenahmeleitung, welche eine Entnahmesonde mit einem Probensammler verbindet, beheizt werden sollte, so daß die Temperatur des Aerosols über einen Taupunkt angehoben wird. Die Entnahmesonde ist dabei in strömungsrichtung des Aerosols angeordnet.

Als Taupunkt ist eine Temperatur bei einem vorgegebenen Druck bezeichnet, bei der das Gas, insbesondere Luft, mit einer kondensierbaren Komponente, beispielsweise Wasserdampf, gesättigt ist und unterhalb derer die Komponente, beispielsweise das Wasser, auskondensiert. Wie eine Beheizung der Probenahmeleitung erfolgen soll, ist in der DIN 25423 nicht beschrieben.

In anderen bekannten Vorrichtungen zur Überwachung der Konzentration der Partikel eines Aerosols wird ein Teilvolumen des Aerosols entnommen und über ein Entnahmeleitungssystem zu einem Analysator, insbesondere einem Aerosolmonitor bzw. einem Aerosolsammler geführt. Wird in dem Aerosol Wasserdampf mitgeführt, so besteht. die Möglichkeit, daß beispielsweise der Wasserdampf an Aerosolpartikeln, welche als Kondensationskeime wirken, auskondensiert und kleine Nebeltröpfchen gebildet werden. Die zu den Nebeltröpfchen angewachsenen Aerosolpartikel werden in dem Entnahmeleitungssystem leicht abgeschieden, so daß nur ein geringer Anteil der in den Nebeltröpfchen enthaltenen Aerosolpartikel bis zu dem Analysator gelangt. Dadurch ist beispielsweise eine Ermittlung der in dem Aerosol mitgeführten Partikelkonzentration auf Grundlage des in den Analysator gelangten Teil-volumens mit einem hohen Meßfehler behaftet, insbesondere ist eine in dem Aerosol transportierte Radioaktivität nur ungenau bestimmbar. Selbst bei einer Beheizung des Entnahmeleitungssystems können damit durchgeführte Messungen außerhalb einer zulässigen Meßfehlertoleranz liegen. Eine Verbesserung der Meßgenauigkeit wird bisher dadurch erreicht, daß die zu Nebeltröpfchen angewachsenen Aerosolpartikel, beispielsweise zusammen mit Wasserdampf, über einen Kondensator abgeschieden werden und das anfallende Kondensat beprobt wird. Nicht abgeschiedene Aerosolpartikel müssen zusätzlich durch ein nachgeschaltetes Schwebstoff-Filter erfaßt werden. Ein solches Verfahren zur Überwachung eines Aerosols erfordert eine Mehrzahl von Verfahrens- und Auswerteschritten. Eine Vorrichtung zur Durchführung eines solchen Verfahrens ist aufwendig und erfordert eine Mehrzahl gesonderter Meßvorrichtungen.

Bei jeder bisher bekannten Vorrichtung zur Überwachung der Konzentration der Partikel eines Aerosols besteht die Gefahr, daß Nebeltröpfchen auskondensieren und Partikel abgeschieden werden, vor allem dann, wenn das Aerosol schon vor der Entnahme Nebeltröpfchen enthält oder die Temperatur des Aerosols vor der Entnahme sprunghaft schwankt, insbesondere infolge von Transienten, und über die Temperatur der Vorrichtung ansteigt. Ein weitgehend ungehinderter Transport der Partikel nach der Entnahme ist mit den bisher bekannten Vorrichtungen und Verfahren nur bedingt gewährleistet.

Aus der US-A-4.342.234 ist eine Entnahmeeinrichtung bekannt, bei der der Strömungskanal ebenfalls beheizt ist. Dazu ist ein Heizstab in eine Bohrung eines Heizmantels eingesetzt, der den Strömungskanal umgibt. Der Heizmantel ist wiederum von einer Isolierung umgeben.

Aufgabe der Erfindung ist es, ein einfaches Entnahmesystem zur Entnahme eines Teilvolumens eines Aerosols anzugeben, welches einen weitgehend ungehinderten Transport der Aerosolpartikel, insbesondere der an Nebeltröpfchen gebundenen Aerosolpartikel, ermöglicht.

Erfindungsgemäß wird diese Aufgabe gelöst durch die Merkmale des Anspruchs 1. Vorteilhafte Ausgestaltungen sind Gegenstand der Unteransprüche.

Das Entnahmesystem gewährleistet, daß beispielsweise eine Kondensation von in dem Aerosol mitgeführtem Wasserdampf an Kondensationskeimen, insbesondere feststoffartiken Partikel des Aerosols unterbleibt. Außerdem können Nebeltröpfchen, die unter ungünstigen Bedingungen schon vor der Entnahme in dem Aerosol vorhanden sind, unmittelbar nach der Entnahme weitgehend verdampft werden, so daß die nach der Verdampfung verbleibenden kleineren Partikel bei allenfalls geringen Abscheidungsverlusten weitgehend vollständig weiter transportiert werden. Zudem wird durch eine unmittelbare Aufheizung des Teilvolumens nach der Entnahme eine Entstehung von Nebeltröpfchen sowie eine Kondensation weitgehend vermieden, auch dann, wenn die Temperatur des Aerosols vor der Entnahme, insbesondere infolge von Transienten, sprunghaften Schwankungen unterworfen ist. Die Vermeidung einer Ablagerung von Aerosolpartikeln schon unmittelbar nach der Entnahme ist schon deshalb besonders vorteilhaft, weil abgelagerte Aerosolpartikel auch bei einer hohen Strömungsgeschwindigkeit des Aerosols kaum wieder in Bewegung gesetzt werden können und so einer Messung weitgehend unzugänglich sind. Durch den weitgehend ungehinderten Transport des Aerosols ist somit eine genaue Überwachung des Aerosols durch eine der Entnahme nachgeschaltete Analyse selbst bei einem transient strömenden Aerosol oder einem Nebeltröpfchen enthaltenden Aerosol gewährleistet.

Durch eine Beheizung der Entnahmevorrichtung wird der Bildung von Nebeltröpfchen sowie einer Ablagerung von Aerosolpartikeln in der Entnahmevorrichtung wirksam entgegengewirkt, auch dann, wenn sich die Temperatur des Aerosols vor der Entnahme sprunghaft erhöht. Das System ist auch dann besonders wirkungsvoll, wenn dem Analysator das Teilvolumen über eine, auch lange, Entnahmeleitung von der Entnahmevorrichtung zugeführt wird. Die Beheizung der Entnahmevorrichtung führt ebenfalls zu einer Erwärmung des Aerosols innerhalb der Entnahmeleitung, so daß ohne eine zusätzliche Beheizung der Entnahmeleitung eine Kondensation bis hin zu dem Analysator vermieden wird. Dadurch ist gewährleistet, daß eine Analyse des Teilvolumens innerhalb des Analysators repräsentativ für das gesamte Aerosol ist, da ein Verlust von Aerosolpartikeln, insbesondere durch Ablagerung in der Entnahmevorrichtung und der ggf. verwendeten Entnahmeleitung, weitgehend vermieden wird. Eine zusätzliche Beheizung einer Entnahmeleitung ist ebenfalls möglich. Eine unbeheizte Entnahmeleitung hat den Vorteil, daß hierfür Standardrohre verwendet werden können, wodurch der Fertigung- und Montageaufwand deutlich verringert ist. Auch beschränkt sich in diesem Fall die Kontrolle der Heizung auf die Entnahmevorrichtung, was gegenüber der Kontrolle einer langen, beheizten Entnahmeleitung eine deutliche Vereinfachung ist.

Besonders günstig ist es, die Temperatur des Aerosols innerhalb der Entnahmevorrichtung, des Analysators und/oder zwischen der Entnahmevorrichtung und dem Analysator, insbesondere an einem abströmseitigen Auslaß der Entnahmevorrichtung und/oder an einem Einlaß des Analysator, zu messen. Gegebenenfalls ist die Entnahmevorrichtung mit dem Analysator über eine Entnahmeleitung verbunden, wobei ebenfalls eine Messung der Temperatur in der Entnahmeleitung durchgeführt werden kann. Bevorzugt sollte die Temperatur des Aerosols in der Entnahmevorrichtung so hoch sein, daß eine Kondensation bis hin zu dem Analysator weitgehend ausgeschlossen ist. Die Temperatur kann sowohl kontinuierlich als auch diskontinuierlich gemessen werden.

Die gemessene Temperatur wird vorteilhafterweise zur Regelung der Beheizung der Entnahmevorrichtung verwendet. Die Entnahmevorrichtung wird bevorzugt so aufgeheizt, daß die Temperatur des Aerosols am Eingang so hoch ist, insbesondere über dem Taupunkt des Aerosols liegt, daß eine Kondensation weitgehend ausgeschlossen ist. Die Temperatur des Aerosols fällt von der Entnahmevorrichtung zu dem Analysator hin ab. Aufgrund eines abfallenden Temperaturverlaufes kann anhand einer zwischen der Entnahmevorrichtung und dem Analysator gemessenen Temperatur die Beheizung der Entnahmevorrichtung, so geregelt werden, daß die Temperatur am Eingang des Analysators hinreichend hoch ist. Strömt das Aerosol zwischen der Entnahmeleitung und dem Analysator durch eine Entnahmeleitung, so kann selbstverständlich auch dort die Temperatur gemessen und zur Regelung verwendet werden. Die Temperatur, insbesondere die am Einlaß des Analysators gemessene Temperatur, kann darüber dazu dienen, eine Überhitzung des Aerosols zu erfassen, durch welche eine Beschädigung, beispielsweise des Analysators, erfolgen könnte. Liegt eine Überhitzung vor, so wird die Beheizung entsprechend geregelt, insbesondere reduziert.

Bevorzugt wird das Teilvolumen des Aerosols unmittelbar nach der Entnahme, insbesondere innerhalb der Entnahmevorrichtung, zwischen 50 °C und 150 °C über die vor der Entnahme. herrschende Temperatur des Aerosols erwärmt. Insbesondere wird das Teilvolumen um 70 °C bis 120 °C, bevorzugtermaßen um 100 °C, aufgeheizt. Dies ist beispielsweise für eine Verdampfung von Nebeltröpfchen mit einem Durchmesser von einigen µm, insbesondere bis etwa 20 µm, innerhalb einer Verdampfungszeit von beispielsweise etwa 100 ms, günstig.

Mit Vorteil wird dabei eine Kanalbegrenzungswand eines Strömungskanals, durch den das Aerosol unmittelbar nach der Entnahme strömt, auf eine Wandtemperatur zwischen 250 °C und 450 °C, insbesondere 350 °C, aufgeheizt. Die Wandtemperatur ist höher als die Temperatur des Aerosols vor der Entnahme, wodurch eine Kondensation an der Kanalbegrenzungswand weitgehend vermieden wird. Nach einem Strömungsweg von einigen Zentimetern, insbesondere 40 cm bis 50 cm, ist dadurch eine Aufheizung des Aerosols um 50 °C bis 150 °C, insbesondere 100 °C, erreichbar. Der Strömungskanal hat vorzugsweise einen Durchmesser von etwa 20 mm bis etwa 60 mm, insbesondere 40 mm.

Da das System gewährleistet, daß ein weitgehend ungehinderter Transport der Aerosolpartikel des Teilvolumens erfolgt, wird eine Überwachung der Partikelkonzentration und/oder der Radioaktivität des Aerosols durch eine Analyse des Teilvolumens besonders einfach und genau. Die Überwachung kann dabei sowohl kontinuierlich als auch diskontinuierlich durchgeführt werden. In Herstellungs- und/oder Fertigungsprozessen, bei denen ein Aerosol entsteht oder verwendet wird, beispielsweise in der chemischen Industrie, oder bei der Strömung eines Aerosols in einem Kanal, beispielsweise eines Abgases einer Verbrennungskraftmaschine oder der Abluft in einer Kernkraftanlage, kann eine kontinuierliche Überwachung besonders günstig sein.

Ein Teilvolumen des Aerosols ist mit der Entnahmevorrichtung unmittelbar nach der Entnahme beheizbar, wodurch gewährleistet ist, daß eine Kondensation und/oder eine Ablagerung von Aerosolpartikeln in der Entnahmevorrichtung vermieden ist.

Bevozugt umgibt das Heizelement den Strömungskanal, wodurch innerhalb des Strömungskanals eine gleichmäßige Aufheizung des Aerosols erreichbar ist. Das Heizelement besteht aus einem elektrischen Widerstandsheizdraht, welcher außerhalb des Strömungskanals angeordnet ist. Eine vorgegebene Aufheizung des Aerosols in der Entnahmevorrichtung, insbesondere in dem Strömungskanal, kann durch Wahl des Querschnittes des Heizdrahtes, durch eine entsprechende Anordnung des Heizdrahtes, beispielsweise als Umwicklung des Strömungskanals, sowie durch Wahl eines geeigneten Werkstoffes des Heizdrahtes erreicht werden.

Ein Heizdraht ist in einem wärmeleitfähigen Material in Form eines Wärmeleitzements, eingebettet, und das Material ist von einer Isolierung ummantelt. Der Heizdraht gibt Wärme an das wärmeleitfähige Material ab, wodurch ein gleichmäßiges Aufheizen des Aerosols, insbesondere über eine größere, Wärme abstrahlende Fläche, ermöglicht ist. Die Isolierung bewirkt, daß die durch das Heizelement, insbesondere den Heizdraht, erzeugte Wärme weitgehend an das Aerosol innerhalb des Strömungskanals übertragen wird, wodurch auch eine Reduzierung der Heizleistung des Heizelementes erreicht wird. Die Isolierung kann dabei ggf. von einer Hülle, insbesondere einer Blechummantelung, umgeben sein, wodurch zudem ein mechanischer Schutz der Isolierung erreicht wird.

Die Entnahmevorrichtung ist vorteilhafterweise mit einem Analysator zur Analyse des Aerosols verbunden, wobei das Aerosol von der Entnahmevorrichtung dem Analysator zuführbar ist. Der Analysator ist beispielsweise direkt oder über eine Entnahmeleitung mit der Entnahmevorrichtung verbunden. Durch eine Beheizung der Entnahmevorrichtung unmittelbar hinter der Entnahmeöffnung ist gewährleistet, daß das Aerosol so heiß wird, daß seine Temperatur selbst bei Eintritt in den Analysator oberhalb des Taupunktes des Aerosols liegt. Eine Kondensation ist somit sicher vermieden.

Vorteilhafterweise ist eine Temperaturmeßvorrichtung zur Messung der Temperatur des Aerosols zwischen der Entnahmeöffnung und dem Analysator vorgesehen. Mit der Temperaturmeßvorrichtung erfolgt bevorzugt die Messung der Temperatur des Aerosols an einem Auslaß der Entnahmevorrichtung und/oder an einem Einlaß des Analysators. Dadurch ist sowohl eine Überhitzung des Aerosols, welche eine Beschädigung des Analysators bedingen kann, als auch eine Kondensationsgefahr der in dem Aerosol mitgeführten kondensierbaren Komponente bei zu niedriger Temperatur des Aerosols erkennbar.

Zur Vermeidung einer Überhitzung und/oder einer zu niedrigen Temperatur des Aerosols ist eine Regelungvorrichtung zur Regelung der Beheizung der Entnahmevorrichtung vorgesehen. Bevorzugt erfolgt eine Regelung, insbesondere des Heizelementes, so, daß am Auslaß der Entnahmevorrichtung die höchste Temperatur und am Einlaß des Analysators die niedrigste Temperatur vorliegt. Die niedrigste Temperatur sollte so hoch sein, daß eine Kondensation ausgeschlossen ist. Sind die Entnahmevorrichtung und der Analysator mit einer Entnahmeleitung verbunden, so kann unter Berücksichtigung der Geometrie der Entnahmeleitung, insbesondere der Länge und des Querschnitts, von einer am Auslaß der Entnahmevorrichtung und/oder einer innerhalb der Entnahmeleitung gemessenen Temperatur auf die Temperatur am Einlaß des Analysators geschlossen und eine entsprechende Regelung der Beheizung des Aerosols durchgeführt werden.

Das System eignet sich besonders für eine Anwendung in einem Fortluft- und/oder Druckentlastungskanal einer Kernkraftanlage, insbesondere zur Überwachung eines radioaktiven Aerosols. Ein solches Aerosol kann unter ungünstigen Umständen, beispielsweise während einer Druckentlastung des Reaktorsicherheitsbehälters, entstehen. Bei einer Durchmischung von Wasserdampf und Gas (z.B. Luft) zur Bildung des Aerosols oder durch Abkühlvorgänge in dem Aerosol kann eine Übersättigung auftreten, so daß Wasserdampf an radioaktiven Aerosolpartikeln, welche als Kondensationskeime wirken, auskondensiert und kleine Nebeltröpfchen gebildet werden. Das Aerosol kann daher neben radioaktiven, insbesondere feststoffartigen, Partikeln zu Nebeltröpfen auskondensiertes Wasser enthalten. Aufgrund ihrer Größe und ihres Gewichtes können sich diese Nebeltröpfchen schon unmittelbar nach Eintritt in eine Entnahmevorrichtung abscheiden und sind somit einer Messung unzugänglich. Dies wird durch eine Aufheizung des Aerosols unmittelbar nach der Entnahme wirksam verhindert. Das System eignet sich ebenfalls für eine Überwachung der Atmosphäre in einer Kernkraftanlage, insbesondere in einem Containment der Kernkraftanlage.

Nachfolgend wird anhand der Zeichnung ein Entnahmesystem erläutert. Es zeigen:
- FIG 1: das Entnahmesystem mit einer Entnahmevorrichtung in einer Draufsicht,
- FIG 2: einen Querschnitt durch einen Strömungskanal der Entnahmevorrichtung und
- FIG 3: einen Detailausschnitt der Entnahmevorrichtung.

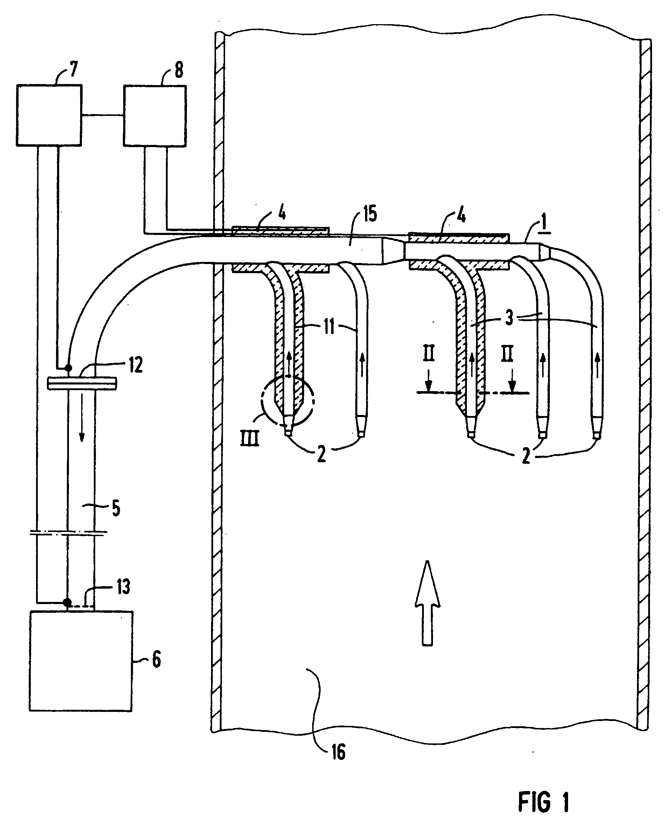

In FIG 1 ist eine Entnahmevorrichtung 1 in einem Probenkanal 16 dargestellt. Die Entnahmevorrichtung 1 hat fünf Entnahmeöffnungen 2, an deren jede sich unmittelbar ein Strömungskanal 3 anschließt. Zur Übersichtlichkeit sind nur an zwei Strömungskanälen 3 zugeordnete Heizelemente 4 dargestellt. Die Strömungskanäle 3 münden in einen Sammelströmungskanal 15, so daß die Entnahmevorrichtung 1 die Form eines Rechens hat. Jedes Heizelement 4 umgibt einen zugeordneten Strömungskanal 3 und liegt an einer Kanalbegrenzungswand 11 des zugeordneten Strömungskanals 3 an, an welche Wärmeenergie zur Aufheizung des Aerosols übertragen wird. Das Aerosol strömt in dem Probenkanal 16 in Richtung des dargestellten Strömungspfeiles. Die Entnahmevorrichtung 1 erstreckt sich weitgehend über einen Querschnitt des Probenkanals 16, so daß durch jede Entnahmeöffnung 2 ein Teilvolumen des Aerosols einströmt und in Pfeilrichtung durch einen jeweiligen Strömungskanal 3 sowie den Sammelströmungskanal 15 zu einem Analysator 6 strömt. Das Aerosol gelangt durch einen Auslaß 12 der Entnahmevorrichtung 1 in eine Entnahmeleitung 5 und von dort über einen Einlaß 13 in den Analysator 6 hinein. Ein direkter Anschluß des Analysators 6 an die Entnahmevorrichtung 1 ist ebenfalls möglich. Am Einlaß 13 des Analysator 6 sowie am Auslaß 12 der Entnahmevorrichtung 1 wird die Temperatur des Aerosols durch eine Temperaturmeßvorrichtung 7 gemessen. Diese Temperaturmeßvorrichtung 7 steht in Wirkverbindung mit einer Regelungsvorrichtung 8. Die Heizelemente 4 werden durch die Regelungsvorrichtung 8 geregelt. Eine Reihenschaltung der Heizelemente 4 sowie eine Regelung der Heizelemente 4 unabhängig voneinander ist möglich. Eine Reihenschaltung der Heizelemente 4 wird beispielsweise dadurch erreicht, daß ein einziger Heizdraht 9 nacheinander durch jedes Heizelement 4 gelegt ist. Die gemessenen Temperaturen dienen jeweils einzeln oder zusammen als Kriterium dafür, ob das Aerosol eine ausreichend hohe Temperatur hat, so daß eine Kondensation und/oder Ablagerung von Aerosolpartikeln in der Entnahmevorrichtung 1 und der Entnahmeleitung 5 sicher vermieden wird. Dazu sollte die Temperatur am Einlaß 13 des Analysator 6 oberhalb des Taupunktes des Aerosols liegen. Ist die Temperatur am Einlaß 13 des Analysators 6 und/oder die Temperatur am Auslaß 12 der Entnahmevorrichtung 1 zu niedrig, so wird die Beheizung der Strömungskanäle 3 erhöht, bis eine ausreichende Temperatur erreicht ist.

In FIG 2 ist ein Querschnitt eines Strömungskanal 3 mit einem Heizelement 4 entlang des Schnittes II-II aus FIG 1 dargestellt. Die Kanalbegrenzungswand 11 des Strömungskanals 3 ist von einem Wärmeleitfähigen Material 10 in Form eines Wärmeleitzements umgeben, in welches der Heizdraht 9 eingebettet ist. Das wärmeleitfähige Material 10 ist von einer Isolierung 14 ummantelt, welche wiederum von einer Blechummantelung 17 umgeben ist. Der elektrische Heizdraht 9 kann spiralförmig gewendelt den Strömungskanal 3 umschließen oder der Heizdraht 9 ist in Strömungsrichtung des Teilvolumens des Aerosols U-förmig entlang der Kanalbegrenzungswand 11 verlegt. Von dem Heizdraht 9 wird Wärmeenergie auf das wärmeleitfähige Material 10 übertragen, wonach die Wärmeenergie weitgehend gleichmäßig an die Kanalbegrenzungswand 11 gelangt. Die aufgeheizte Kanalbegrenzungswand 11 gibt Wärmeenergie an das Aersosol ab, wodurch dieses ebenfalls aufgeheizt wird. Die Isolierung 14 verhindert weitgehend eine Abfuhr der Wärmeenergie in Richtung der Blechummantelung 17, wodurch der überwiegende Teil der Wärmeenergie an die Kanalbegrenzungswand 11 gelangt. Die Blechummantelung 17 bewirkt einen mechanischen Schutz der Isolierung 14 oder dient ggf. als zusammenhaltende Hülle für die Isolierung 14, falls diese beispielsweise in Form eines Pulvers vorliegt. Der Querschnitt des Strömungskanals 3 sowie der Isolierung 14 kann anstelle der Kreisform durchaus eine andere Form, beispielsweise eine Rechteckform, aufweisen. Der Strömungskanal 3 hat einen Durchmesser von etwa 40 mm und eine Länge von etwa 400 mm, so daß bei einem Volumenstrom des Aerosols von etwa 20 m³/h und einer Temperatur der Kanalbegrenzungswand 11 von etwa 350 °C eine Aufheizung des Aerosols innerhalb des Strömungskanals 3 von 30 °C auf etwa 150 °C erfolgt.

FIG 3 zeigt einen Detailausschnitt III des Strömungskanals 3 und des Heizelementes 4 nach FIG 1. Die Bezeichnungen stimmen dabei mit denen aus FIG 2 überein. Das Aerosol gelangt durch die Entnahmeöffnung 2 (s. FIG 1) in den Strömungskanal 3 hinein und strömt durch diesen gemäß der Pfeilrichtung hindurch. Unmittelbar hinter der Entnahmeöffnung 2 wird die Kanalbegrenzungswand 11 von dem wärmeleitfähigen Material 10 umgeben. Dadurch, daß der Heizdraht 9 ebenfalls bis unmittelbar in die Umgebung der Entnahmeöffnung 2 geführt ist, wird das Aerosol durch Wärmekontakt mit der Kanalbegrenzungswand 11 sowie durch Wärmestrahlung, die von der Kanalbegrenzungswand 11 ausgesandt wird, unmittelbar hinter der Entnahmeöffnung 2 aufgeheizt. Bei der Durchströmung des Strömungskanals 3 wird das Aerosol weiter aufgeheizt, so daß eine Kondensation in der Entnahmevorrichtung 1 sicher vermieden wird.

Das Entnahmesystem zeichnet sich dadurch aus, daß schon unmittelbar nach der Entnahme des Teilvolumens eine Kondensation sowie eine Ablagerung von Aerosolpartikeln durch eine Aufheizung des Aerosols weitgehend verhindert wird. Darüber hinaus werden Nebeltröpfchen, die schon vor der Entnahme auskondensiert sind, unmittelbar nach der Entnahme verdampft. Dadurch ist ein weitgehend ungestörter Transport der Aerosolpartikel von der Entnahmevorrichtung, selbst durch lange Entnahmeleitungen hindurch, gewährleistet. Eine genaue Überwachung der Konzentration der Aerosolpartikel, insbesondere einer in dem Aerosol mitgeführten Radioaktivitätsmenge, ist dadurch besonders einfach und genau ermöglicht. Die Entnahmevorrichtung ist darüber hinaus einfach herzustellen und auch nachträglich, beispielsweise im Zuge eines Austausches, leicht montierbar. Einsatzgebiete des Entnahmesystems liegen in der chemischen Industrie, bei Verbrennungskraftmaschinen sowie bei der Überwachung in Kernkraftanlagen.

## Patentansprüche

1. Entnahmesystem mit einem Probekanal (16) und einer darin angeordneten Entnahmeeinrichtung (1) zur Entnahme eines Teilvolumens eines Aerosols, wobei die Entnahmeeinrichtung (1) eine Entnahmeöffnung (2) und einen sich daran unmittelbar anschließenden Strömungskanal (3) umfasst, an dem ein Heizelement (4) zur Aufheizung des Teilvolumens unmittelbar nach der Entnahme angeordnet ist,
**dadurch gekennzeichnet,**
**dass** die Entnahmeöffnung (2) und der sich daran unmittelbar anschließende Strömungskanal (3) in Strömungsrichtung des in dem Probekanal (16) strömenden Aerosols angeordnet sind, und
**dass** das Heizelement (4) einen Heizdraht (9) aufweist, welcher in einem wärmeleitfähigen Material (10) in Form eines Wärmeleitzements eingebettet ist, wobei das Material (10) von einer Isolierung (14) ummantelt ist.

2. Entnahmesystem nach Anspruch 1, bei der das Heizelement (4) den Strömungskanal (3) umgibt.

3. Entnahmesystem nach Anspruch 1 oder 2, mit einem Analysator (6) zur Analyse des Aerosols, wobei das Aerosol von der Entnahmevorrichtung (1) durch eine Entnahmeleitung (5) dem Analysator (6) zuführbar ist.

4. Entnahmesystem nach Anspruch 3, mit einer Temperaturmeßvorrichtung (7) zur Messung der Temperatur des Aerosols zwischen der Entnahmeöffnung (2) und dem Analysator (6).

5. Entnahmesystem nach Anspruch 4, mit einer Regelungsvorrichtung (8) zur Regelung des Heizelementes (4) in Abhängigkeit von der gemessenen Temperatur.

6. Verwendung des Entnahmesystems nach einem der Ansprüche 1 bis 5 in einem Fortluft- und/oder Druckentlastungskanal einer Kernkraftanlage.

## Claims

1. A sampling system having a sampling duct (16) and a sampling means (1) arranged therein for taking a sample volume of an aerosol, wherein the sampling means (1) comprises a sampling opening (2) and a flow channel (3) connected directly thereto, at which flow channel there is arranged a heating element (4) for heating up the sample volume directly after sampling,
**characterised in that**
the sampling opening (2) and the flow channel (3) connected directly thereto are arranged in the flow direction of the aerosol flowing in the sampling duct (16),
and **in that** the heating element (4) comprises a heated filament (9), which is embedded in a heat-conducting material (10) in the form of a heat-conducting cement, wherein the material (10) is sheathed in insulation (14).

2. A sampling system according to claim 1, in which the heating element (4) surrounds the flow channel (3).

3. A sampling system according to claim 1 or claim 2, having an analyser (6) for analysing the aerosol, wherein the aerosol may be fed from the sampling device (1) through a sampling line (5) to the analyser (6).

4. A sampling system according to claim 3, having a temperature measuring device (7) for measuring the temperature of the aerosol between the sampling opening (2) and the analyser (6).

5. A sampling system according to claim 4, having a control device (8) for controlling the heating element (4) as a function of the measured temperature.

6. Use of the sampling system according to one of claims 1 to 5, in an outgoing air and/or pressure relief duct of a nuclear power plant.

## Revendications

1. Dispositif de prélèvement comprenant un canal (16) à échantillon et un dispositif (1) de prélèvement qui y est monté et qui est destiné à prélever un volume partiel d'un aérosol, le dispositif (1) de prélèvement comprenant une ouverture (2) de prélèvement et un canal (3) d'écoulement qui s'y rattache directement, et sur lequel est monté, directement après le prélèvement, un élément (4) de chauffage pour chauffer le volume partiel,
**caractérisé,**
**en ce que** l'ouverture (2) de prélèvement et le canal (3) d'écoulement qui s'y rattache directement sont disposés dans la direction d'écoulement de l'aérosol s'écoulant dans le canal (16) à échantillon, et
**en ce que** l'élément (4) de chauffage comporte un fil (9) de chauffage qui est incorporé dans un matériau (6) conducteur de la chaleur, le matériau (10) étant gainé d'un isolant (14).

2. Dispositif de prélèvement suivant la revendication 1, dans lequel l'élément (4) de chauffage entoure le canal (3) d'écoulement.

3. Dispositif de prélèvement suivant la revendication 1 ou 2, comprenant un analyseur (6) destiné à analyser l'aérosol, l'aérosol pouvant être apporté par le dispositif (1) de prélèvement à l'analyseur (6) en passant par un conduit (5) de prélèvement.

4. Dispositif de prélèvement suivant la revendication 3, comprenant un dispositif (7) de repérage de la température destiné à repérer la température de l'aérosol entre l'ouverture (2) de prélèvement et l'analyseur.

5. Dispositif de prélèvement suivant la revendication 4, comprenant un dispositif (8) de régulation destiné à réguler l'élément (4) de chauffage en fonction de la température repérée.

6. Utilisation du dispositif de prélèvement suivant l'une des revendications 1 à 5, dans un canal d'air et/ou dans un canal de détente de la pression d'une centrale nucléaire.
